# EUROPEAN PATENT SPECIFICATION

(11) **EP 1 343 262 B1**
(45) Date of publication and mention of the grant of the patent: **21.12.2005**
(21) Application number: 02360083.6
(22) Date of filing: 08.03.2002
(51) Int. Cl.: H04J 3/08, H04L 12/46

(54) **A method of restoring a facility failure in a communication network consisting of rings, a correpsonding communication network and network element**
Verfahren zur Wiederherstellung nach Betriebstörungen in einem aus Ringen aufgebauten Kommunikationsnetz, ein zugehöriges Kommunikationsnetz und Netzelement
Méthode de restoration d' une installation défaillante dans un réseau de communication formé d'anneaux, un réseau de communication et un élément de réseau correspondant

(43) Date of publication of application: 10.09.2003
(73) Proprietor: ALCATEL, 75008 Paris (FR)
(72) Inventor: Grammel, Gert, 73066 Uhingen (DE)
(74) Representative: Urlichs, Stefan

(56) References cited:
- EP-A- 0 822 678
- WO-A-02/17526
- US-A- 5 550 805
- "Part 17 : Resilient packet ring access method and physical layer specifications" DRAFT 0.4 P802.17/D0.4, [Online] 8 November 2001 (2001-11-08), pages 1-82, XP002208764 Retrieved from the Internet: <URL:http://grouper.ieee.org/groups/802/17 /documents/drafts/gandalf_04Plus.pdf> [retrieved on 2002-08-05]

## Description

### Technical Field

The present invention relates to a method of restoring a facility failure in a communication network. The invention furthermore relates to a communication network therefor, a network element therefor, a protocol therefor, a program module for a network element therefor and a communication interface module for a network element therefor.

### Background of the Invention

The ability to restore traffic from a failure in a communication network, especially in a synchronous digital network, within a very short time is of high importance to service providers and their customers. To this end, the network provides protection transmission capacity for rerouting signals to their destinations in case of one or multiple failures in the network to bypass the failure location(s) within a short period of time, for example within 50 Milliseconds. The failures may occur accidentally or in consequence of planned activities in a network, e.g. civil works on a fiber route or node equipment upgrade on the signal route, which disrupt active services temporarily.

Especially in synchronous digital networks such as SDH (= Synchronous Digital Hierarchy) or SONET (= Synchronous Optical Network) it is known to provide ring structures with rings having both a working transmission capacity and a protection transmission capacity. A ring comprises network elements connected in a circular fashion. Each network element is interconnected with its neighbor and includes capacity for transmission in either direction between adjacent network elements. Line switched rings, e.g. Bi-directional Line Switched Rings (BLSR) of the SONET architecture or multiplex section shared protection rings (MS Spring) in the SDH architecture, can actively reroute traffic over a protection channel or line. The network elements of such a ring inform each other about the location of a failure, e.g. by means of the so-called Automatic Protection Switching (APS) protocol (also called the "K1/K2 protocol") or the so-called BLSR protocol respectively. Based on this failure information the network elements decide locally on a restoration path. The restoration path can be established very rapidly. It is however expensive to provide each ring with the necessary protection transmission capacity.

In meshed networks topologies, theoretically, each point in a network has a direct pathway to every other point in the network. Thus, the necessary protection transmission capacity is - provided the meshed network does not work to its capacity - available without any special measure. One possibility for bypassing a failure are so-called p-cycles encircling a tailed node and/or link. It is however time consuming to determine a restoration path, e.g. a p-cycle, for bypassing a failure location.

WO 02/17526 discloses a method of restoring a failed link in a network. The network consists of interconnected rings. Adjacent rings share common working and protection fibers, such that traffic on the shared working fiber can be protected by the ring architecture of either of adjacent rings. A separate dedicated protection protocol is used on either ring to communicate the occurrence of a failure and initiate protection switching.

EP 0 822 678 discloses a method of restoring traffic in the event of multiple failures in a network. The network consists of interconnected rings, but which do not share common protection capacity. A flood search is performed in the case of failure in order to find an alternate protection path.

US 5,550,805 describes a method of restoring traffic in a network in the event of a failure. The network consists of interconnected rings, which share common transmission links. However, the capacity of the common links is equally distributed among the adjacent rings and transmission capacity of each ring is divided into working and protection capacity. The rings therefore do not share common protection capacity. A failure is communicated along the ring using conventional protection protocol and traffic re-routed in each ring toward the opposite direction away from the failure.

### Summary of the Invention:

Accordingly, one object of the invention is to provide an efficient method of restoring a facility failure in a communication network. Furthermore, suited means therefor shall be provided.

This object is to be attained by a method in accordance with the technical principle of claim 1. This object is furthermore to be attained by a communication network and a network element in accordance with technical principles of further independent claims.

In this respect one principle of the invention to provide a communication network, e.g. a synchronous digital network, comprising at least two interconnected rings, for example a first ring and at least one second ring that are adjacent to each other. Each ring provides both ring-shaped working transmission capacity and ring-shaped protection transmission capacity. The respective transmission capacities are provided by transmission sections. Each transmission section is terminated by two network elements, e.g. a cross-connect and/or a multiplexing system. Two interconnected adjacent rings,, for example the first and the at least one second ring, share the protection transmission capacity of at least one section. Each of said adjacent rings has nevertheless an individual ring-shaped working transmission capacity. In other words: though the adjacent rings share at least partly the protection transmission capacity of shared sections each ring provides a separate ring working transmission capacity.

A further aspect of the invention is the self-restoration functionality of the interconnected rings. The network elements monitor the respective rings for a facility failure, e.g. a line failure and/or failure of a network element. A facility failure may comprise multiple line failures and/or failures of a network element. In the case of a facility failure, the network elements communicate failure information about this facility failure. The network elements inform each other about the span or location of the failure, e.g. the network elements terminating the span of the facility failure and the ring affected by the failure. It has to be understood, that the span of the failure may not only comprise a specific failed link and/or a specific failed network element. Also working links or working network elements being adjacent to a specific failed facility may be assigned to a failed span if it is for example not useful to route working traffic up to the specific failed facility via the still working links or working network elements and subsequently back also via said working facilities.

The specific failure information about the ring affected by the failure may be, e.g., contained in the protocol with which the failure information is transmitted. The protocol may contain for example a ring identifier identifying the affected ring, i.e., a ring identifier distinguishing the affected ring from the non affected adjacent ones. Also network element identifiers assigned to the network elements terminating the span of the facility failure can identify the ring affected by the failure. Such an network element identifier may for example comprise a network element specific and a ring specific part.

Furthermore, the method to transmit the failure information may be the basis for respective receiving network elements to determine the affected ring: a first receiving port of a network element jointly belonging to a first and a second ring is for example assigned to the first ring and a second receiving port to the second ring. If the network element receives a failure information on the first port it determines that the first ring is affected by the failure; if the failure information arrives at the second first port the second ring is affected by the failure. In other words, the network elements may determine the ring affected by the failure by means of the respective ingress port receiving failure information even if the failure information as such does not identify the ring, even if the failure information is so to say ring-unspecific. The failure information that identifies in this scenario for example only the network elements terminating the failed span.

It has to be noted, that a combination of transmitting a failure information explicitly identifying the ring affected by the failure, e.g. a ring identifier, and a suited method to transmit the failure information, for example via the aforementioned ports each being uniquely assigned to one ring, may form the basis to uniquely identify the location of the failure.

Based on the information about the location of the failure, the network elements, preferably only the network elements of the affected ring, determine a restoration transmission path to restore the facility failure. The restoration transmission path is based on the undisturbed protection transmission capacity of the ring affected by the facility failure. To finalize the self-restoration process the network elements switch the working traffic of the ring affected by the facility failure to the restoration transmission path.

Though the invention prefers pre-assigned protection transmission capacity, it is not limited to "protection" in this sense. According to the definition of the ITU-T (ITU = International Telecommunication Union) protection makes use of pre-assigned capacity between network elements and/or nodes. The invention may also be applied to "restoration" making use of any capacity available between network elements of the communication network. For example some percentage of the network capacity could be reserved for rerouting of working traffic. In other words, "protection transmission capacity" according to the invention is any spare transmission capacity - either pre-assigned or not - that may be used for recovering a facility failure in a communication network.

The inventive concept makes an efficient fast shared protection switching possible. The spare or protection bandwidth required thereto is significantly reduced. For example a conventional network with 7 rings, each having 6 nodes and each ring designed as a multiplex section shared protection ring (MS Spring) requires typically 42 protection + 42 working channels. A network according to the invention however has, e.g., 30 protection channels and 42 working channels. Thus, in this example about 29% less protection transmission capacity is necessary.

The invention may be summarized as follows:

The communication network comprises adjacent, interconnected rings. The rings provide both ring-shaped working and ring-shaped protection transmission capacities, which are divided into transmission sections. The transmission sections are terminated by two network elements. Adjacent rings share at least partly the protection transmission capacity of shared transmission sections. The network elements of the rings monitor the respective rings for a facility failure. In the event of a failure, the network elements inform each other about the facility failure by a failure information containing data about the span of the facility failure. The failure information and/or the method to transmit the failure information identify furthermore the respective ring affected by the failure. Based on the failure information a restoration transmission path to restore the failure is determined. The working traffic of the ring affected by the failure is switched to the restoration transmission path.

Advantageous further effects of the invention will be seen from the dependent claims and the specification.

Preferably the restoration transmission path includes the protection transmission capacity of the respective transmission section(s) shared by adjacent rings.

The communication network is or comprises preferably a synchronous digital network, especially a SDH (= Synchronous Digital Hierarchy) network and/or a SONET (= Synchronous Optical Network).

A suitable embodiment of the invention provides, that the information about the failure contains a ring identifier identifying the respective ring affected by the facility failure.

The ring identifier is preferably a relative identifier identifying one ring in relation to the respective other adjacent ring. Thus, one such relative identifier can be used to identify more than one ring of the communication network if the rings having the same identifier have not to be directly distinguished from each other. As known from graph theory, for a two-dimensional map it is sufficient to have four different codes to distinguish at any point of the map each zone from its neighbor zone. Accordingly two digital bits are basically sufficient for the aforementioned relative identifier to distinguish each ring from its neighbor ring. Based on these two bits, that may contained in a overhead information, in SDH/SONET, e.g., either the so-called J0 byte (also called section trace bytes) or at least one MD byte (MD= Media Dependent) of the RSOH (Regenerator Section Overhead) or the MSOH, (Multiplex Section Overhead) of the Section Overhead (SOH), any network element (node) of a ring can take an appropriate switching decision to switch working traffic from working to protection transmission capacity or vice versa.

It is however also possible to provide an absolute identifier identifying the ring affected by the facility failure uniquely in the communication network.

The failure information is preferably transmitted by means of a predefined protocol. The protocol comprises for example synchronous transport modules (STM) or is based on such modules.

If the communication network is or comprises a SDH network the protocol may be based on the so-called Automatic Protection Switching (APS) protocol. The failure information containing data about the span and/or the network elements terminating the span of the facility failure and/or the failure information identifying the ring affected by the facility failure is for example contained in the Automatic Protection Switching (APS) channel of a synchronous transport module (STM), especially in the K1 byte and/or in the K2 byte and/or in the MD bytes, e.g., the MD1 and/or MD2 byte(s), and/or in the J0 byte. It is clear, that any other - preferably so far not used - information fields of the protocol may carry an absolute or relative ring identifier. It has also to be noted, that various other protocols can be used to carry failure information according to the invention.

If the communication network is or comprises a SONET, the aforementioned failure information may be, e.g., comprised in the BLSR protocol.

The rings arranged according to the invention are preferably multiplex section shared protection rings. It has however to be noted that any other rings providing both ring-shaped working transmission capacity and ring-shaped protection transmission capacity can be interconnected according to the invention.

The following description will serve to explain the advantages of the invention on the basis of working examples as illustrated in the accompanying drawings.

### Brief Description of the Drawings:

- Figure 1: shows an arrangement for the performance of the method in accordance with the invention using a communication network CN in accordance with the invention; the communication network CN comprises rings M1 to M4.
- Figure 2: shows a network element 4 in accordance with the invention; the network element 4 comprises communication interface modules IM1-IM3 according to the invention.
- Figure 3: shows a program module PM in accordance with the invention.

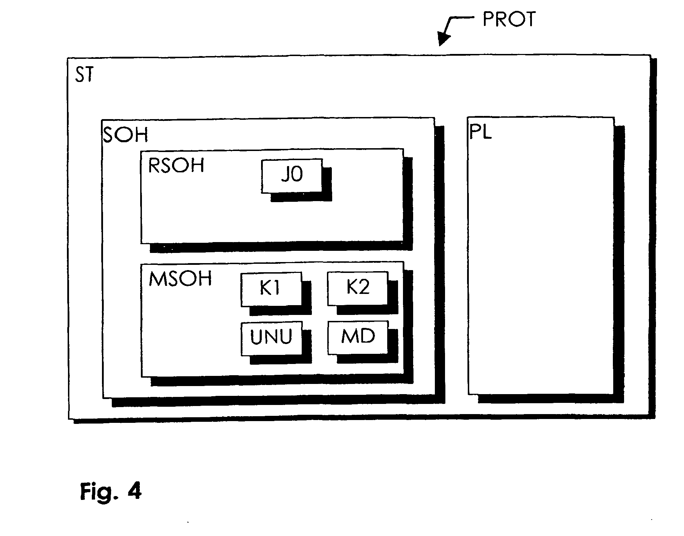

- Figure 4: shows a transport module ST of a protocol in accordance with the invention.
- Figure 5: shows a detail of figure 1 (rings M1, M3 and M4 are only partially illustrated) with restoration transmission paths RP1, RP2.
- Figure 6: shows the same detail of figure 1 as figure 5 but with alternative restoration transmission paths RP3, RP4.

### Detailed Description:

Reference will now be made in detail to the present preferred embodiments of the invention as illustrated in the accompanying drawings. In describing the preferred embodiments and applications of the present invention, specific terminology is employed for the sake of clarity. However, the invention is not intended to be limited to the specific terminology so selected, and it is understood that each specific element includes all technical equivalents which operate in a similar manner to accomplish a similar purpose.

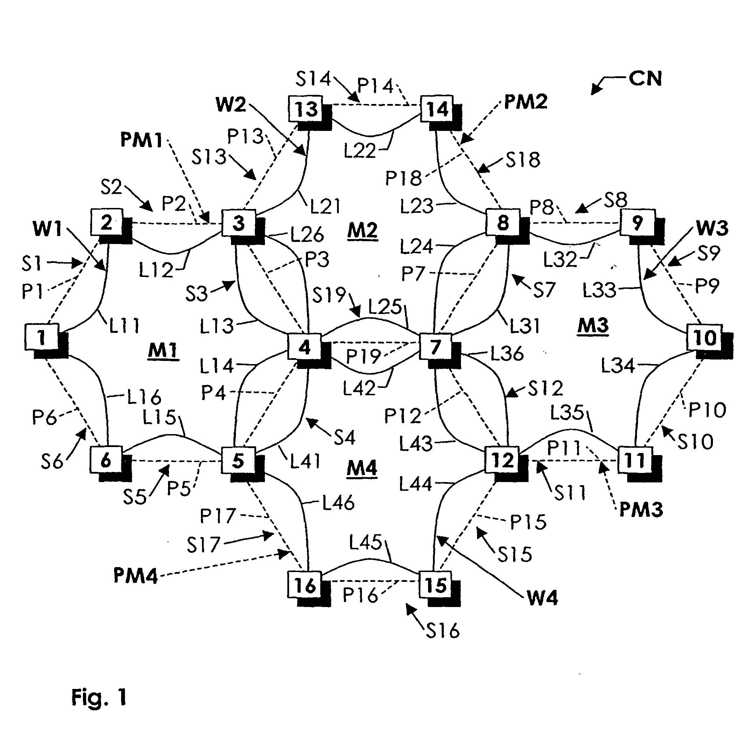

Figure 1 shows a very diagrammatically presented arrangement by way of example. A communication network CN comprises interconnected rings M1 to M4. The communication network CN comprises for example optical and/or electrical transmission capacities. The rings M1 to M4 are for example Bi-directional Line Switched Rings (BLSR), so-called Multiplex section shared protection rings (MS Spring) in the ITU-T terminology. The rings M1 and M3 are each adjacent to and interconnected with rings M2 and M4. Accordingly, the rings M2 and M4 are adjacent to and interconnected with the respective other rings M1, M3, M4 and M1 to M3.

The ring M1 comprises network elements 1 to 6, the ring M3 network elements 7 to 12. The network elements 1 to 12 as well as network elements 13, 14 and 15, 16 assigned to the rings M4 and M2 may also be denominated as nodes. For simplification the network elements 1 to 16 are hereinafter denominated "nodes 1 to 16 ". Accordingly, the rings M1 to M4 could also be called multinode rings. Each node 1 to 16, which are e.g. multiplexing systems combining several channels to be carried by one line or fiber and/or cross-connect systems, terminates at least two of sections S1 to S19. Each section S1 to S19 comprises communication connections (not illustrated in detail) between the nodes 1 to 16 terminating both ends of the respective section. The communication connections comprise for example two, four or six optical fibers or electrical wires for transmission of data.

The network CN can comprise not illustrated terminal devices. The network CN may be connected with one or more further networks, which are not illustrated. Ingress lines or ports for traffic entering the network CN, e.g. at one or more of the nodes 1 to 16, or egress lines or ports for traffic leaving the network CN are for simplification not illustrated in the figures.

The ring M1 comprises sections 1 to 6. Each section 1 to 6 is terminated by two of the nodes 1 to 6. Accordingly, each node 1 to 6 terminates two of the sections 1 to 6. For example node 1 terminates sections 6 and 1, node 2 sections 1 and 2, node 3 sections 2 and 3, and so on. The same clockwise denomination system applies to ring M3 comprising sections S7 to S12: node 7 terminates sections 12 and 7, node 8 sections 7 and 8, and so on.

Ring M2 consists of sections S13, S14, S18, S7, S19, S3 terminated by nodes 3, 13, 14, 8, 7, 4 that are assigned to ring M2. The ring M4 comprises nodes 5, 4, 7, 12, 15 and 16 terminating sections S4, S19, S12, S15, S16, S17 of ring M4.

The nodes 3, 4, 5, 7, 8, 12 are assigned to two or (nodes 4 and 7) three of the rings M1 to M4: the nodes 3 and 4 are assigned to rings M1 and M2, the nodes 7, 8 to rings M2 and M3, the nodes 7, 12 to rings M3 and M4 and the nodes 4 and 5 to rings M4 and M1. Accordingly the section S3 between nodes 3, 4 is assigned to the rings M1 and M2 and the section S19 between nodes 4 and 7 to the rings M2 and M4. The section S7 between nodes 7 and 8 is a joint section of rings M2 and M3. The section S12 between nodes 12 and 7 belongs to both rings M3 and M4 and section S4 between nodes 4 and 5 is a common section of rings M4 and M1.

Each section S1 to S19 provides both working transmission capacity and protection transmission capacity. The respective protection transmission capacity is illustrated in dashed lines, the working transmission capacity in full lines. In the known MS Spring architecture half the capacity in each section of a ring is used for working traffic and the remaining half is available in case of a failure in any section of the ring. This concept applies basically for the rings M1 to M4 except for the protection transmission capacity of the shared/joint sections S3, S4, S19, S7 and S12 which is shared by the respective adjacent rings M1, M2, M3 and M4. Accordingly, the rings M1 to M4 may be for example basically two-fiber or four-fiber STM-N rings (Synchronous Transport Module (level) N). In a two-fiber STM-N ring, there are N/2 administrative unit groups (AUGs) available for working and N/2 AUGs for protection. On each fiber, half the channels are defined as working channels and half are defined as protection channels. In a four-fiber STM-N ring, there are N AUGs available for working and N AUGs available for protection. In the present embodiment the total payload per multiplex section S1 to S19 is equally divided into working and protection capacity. It would however be possible to define other relations between working and protection transmission capacities per section S1 to S19.

The respective working transmission capacities and protection transmission capacities of the rings M1 to M4 are ring-shaped:

Ring working capacities W1 to W4 of rings M1 to M4 are provided by communication links L11 to L16, L21 to L26, L31 to L36 and L41 to L46 between the nodes of the respective ring M1 to M4. The links L11 to L16 are assigned to the sections 1 to 6, the links L21 to L26 to the sections S13, S14, S18, S7, S19, S3, the links L31 to L36 to the sections S7 to S12 and the links L41 to L46 to the sections S4, S19, S12, S15, S16, S17.

Also the protection transmission capacities of the rings M1 to M4 are ring-shaped. The ring protection capacities PM1 to PM4 of the rings M1 to M4 comprise protection connections P1 to P6 of sections S1 to S6, protection connections P13, P14, P18, P7, P19, P3 of sections S13, S14, S18, S7, S19, S3, protection connections P7 to P12 of sections S7 to S12 and protection connections P4, P19, P12, P15, P16, P17 of sections S4, S19, S12, S15, S16, S17.

In contrast to the ring working capacities W 1 to W4, the ring protection capacities PM1 to PM4 are partly based on shared protection transmission capacities provided by the joint/shared sections S3, S4, S7, S12, S19 that are each assigned to two respective adjacent rings M1 to M4. The adjacent ring protection capacities PM1 and PM2 share the protection connection P3 of the shared section S3, the ring protection capacities PM1 and PM4 the protection connection P4 of the shared section S4. Accordingly, ring protection capacities PM3, PM2 and PM3, PM4 share the protection connections P7 and P12 of the shared sections S4 and S12 respectively. The protection connection P19 of the shared section S19 is shared by the ring protection capacities PM2 and PM4. The shared protection connections P3, P4, P7, P12, P19 have in the present embodiment the same protection transmission capacity as the un-shared protection connections P1, P2, P5, P6, P8 - P11, P13 - P18. It would however be possible to equip the shared sections S3, S4, S7, S12, S19 with, e.g., the 1,5-fold protection transmission capacity of the un-shared sections S1, S2, S5, S6, S8 - S11, S13 - S18.

The ring protection capacities PM1 to PM4 can be accessed by any multiplex section of the multinode rings M1 to M4 under a section and/or node failure condition. Thus, the protection capacity is shared between multiple multiplex sections of the respective ring M1, M2, M3 or M4. Under non-failure conditions, the protection capacity can be used to support lower priority "extra traffic". This extra traffic is not itself protected. A detailed description of multiplex section shared protection rings including a definition of the APS protocol is provided in ITU-T Recommendation G.841, which is hereby included by reference.

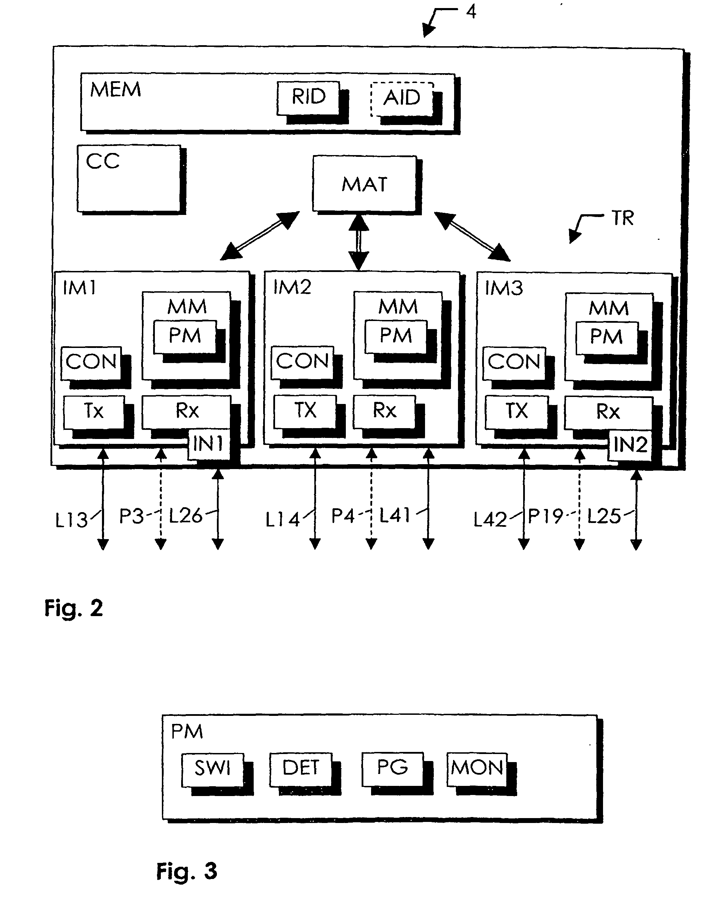

For simplification the nodes 1 to 16 are of similar design and only diagrammatically depicted as block diagrams of functions. Each node 1 to 16 may comprise one or more printed circuit boards and/or integrated circuits. Figure 2 shows, e.g., a block diagram for the node 4 that may also represent the nodes 3, 4, 5, 7, 8, 12 terminating 3 sections. Also the other nodes 1, 2, 6, 9 to 11 and 13 to 16 terminating 2 sections may be basically of the design shown in figure 2.

The node 4 possesses connecting means TR comprising communication interface modules IM1 to IM3 for the transmission and reception of data via connections/communication links L13, P3, L26; L14, P4, L41 and L25, P19, L42. The modules IM1 to IM3 can transmit and receive data according to the definitions of SDH. Furthermore, in the present embodiment, the modules IM1 to IM3 are suited for multiplexing and/or de-multiplexing of data, e.g. adapting of multiple higher order path layer signals into a multiplex section and vice versa.

A switching matrix module MAT interconnects the modules IM1 to IM3. The modules IM1 to IM3 could however be directly connected. In such scenario the modules IM1 to IM3 would at least partly provide the functionality the matrix module MAT: via the matrix module MAT data may be transmitted from an input port of a module IM1, IM2 or IM3 to one or more output ports of the same or another module IM1, IM2 or IM3.

The nodes 1, 2, 6, 9 to 11 and 13 to 16 that terminate only two sections could be equipped, e.g., with two modules of similar design as the modules IM1 to IM3.

The node 4 possesses a central control means CC and memory means MEM that are connected with each other and with the connecting means TR by connections, which are not illustrated. The central control means CC are for example processors or processor arrays with which a program code of program modules may be executed, which are stored in memory means MEM. The central control means CC controls and monitors the modules IM1 to IM3. Furthermore the node 4 may have display means as for example light emitting Diodes (LED), an LCD (liquid crystal display) or the like. Input means, for example a keyboard and/or a computer mouse, may be connected with the node 4. The central control means CC and the modules IM1, IM2, IM3 are for example separate rack modules.

Each module IM1, IM2, IM3 possesses a control means CON, for example one or more processors, that executes program code of program modules, e.g. a program module PM according to the invention, stored in memory means MM that are for instance in the form of flash memory modules and/or RAM modules. In order to be executed the program module PM is loaded from the memory means MEM into the control means CPU. The modules IM1, IM2, IM3 are run by an operating system as for instance a real time operating system (RTOS). Receiving means RX and sending means TX are for receiving and sending of data on the connections terminated by the respective module IM1, IM2, IM3. The means RX and TX communicate with and are controlled by the control means CON via internal connections of the module IM1, IM2, IM3 that are not illustrated. Thus, the program module PM so to speak "controls" the means RX and TX.

For simplification the program module PM is only diagrammatically depicted as a block diagram of functions. These functions comprise a function MON for monitoring the transmission section terminated by the respective module IM1, IM2, IM3 for a facility failure. A function PG is for sending and receiving failure information about a facility failure (either detected by the respective module IM1, IM2, IM3 itself or a by remote node, e.g., the nodes 13 or 14 as explained later). A function DET determines a restoration transmission path, e.g., paths RP1- RP4, to restore a facility failure based on the failure information received the function PG and/or detected by the function MON. A function SWI is for switching working traffic to a restoration transmission path in consequence to a facility failure. The function SWI instructs for example the means RX and TX accordingly.

In a preferred embodiment of the invention - which is however not illustrated in detail in the figures - the modules IM1, IM2, IM3 are so to say "hardware solutions", i.e. comprising integrated circuits performing one or more of the functions of the program module PM, for example the functions MON, SWI, DET and PG. To this end, such a preferred communication interface module may comprise for example an ASIC (Application Specific Integrated Circuit). Such an ASIC could provide one or more of the functions of the program module PM in cooperation with the control means CON or, in another scenario, instead of it. In the latter scenario there would be no program module PM necessary. The advantage of a communication interface module completely or at least basically based on hardware is its performance. In this context it is of advantage to use a relative ring identifier having only a few values, e.g., only four values. These few values can be very quickly generated and/or evaluated by an ASIC or any other suited hardware.

In the following it will be explained how the method according to the invention is carried out by the network elements (nodes 1 - 16), i.e., by communication interface modules according to the invention, e.g., the modules IM1 - IM3, equipped with program modules PM. It has however to be noted, that an interface module completely designed in hardware would basically work in the same manner as the "software driven" communication interface modules IM1 - IM3.

As known from MS shared protection rings a service can be routed on each ring M1 to M4 in either one of the two different directions, the long way around the ring or the short way. Although the short way will usually be preferred, occasionally routing service over the long way permits some load balancing capabilities. When however a section or a node fails, the failed section(s) is/are replaced by the concatenated protection section around the other side of the ring.

To route a service over the long way is however not necessary if only the working transmission capacity of one or more section(s) is/are disturbed and the protection transmission capacity is operable. If for example the working communication link L22 of section S14 is cut, e.g., due to an error of an interface module of node 13 or 14 terminating the link L22, the nodes 13, 14 can route the working traffic via the protection connection P14.

If however the section S14 is completely disturbed, e.g. if a cable carrying the working and protection links L22, P14 is cut, the protection connection P14 of the respective section S14 is not serviceable. Two methods to restore this "fatal" failure will be explained: the so-called wrapping or the so-called steering.

"Wrapping" means that switching is performed at the nodes immediately adjacent to the failed location regardless of the final destinations of the signals within the ring. The failed location may comprise one or more sections.

"Steering" means that the shortest possible restoration path is determined. The traffic is usually not routed up to the nodes adjacent to the failed location except for the case that the shortest possible restoration path involves a node adjacent to the failed location. Instead nodes remote from the adjacent nodes switch ("steer") the working traffic to the shortest possible restoration path. Thus, in contrast to wrapping extra ("double") traffic fo the nodes adjacent to the failure location and back is avoided. Therefore, an amended "steering" method that will be explained later is of special advantage for long distance networks such as submarine networks.

Both basically known methods, wrapping and/or steering, can advantageously be performed based the method according to the invention:

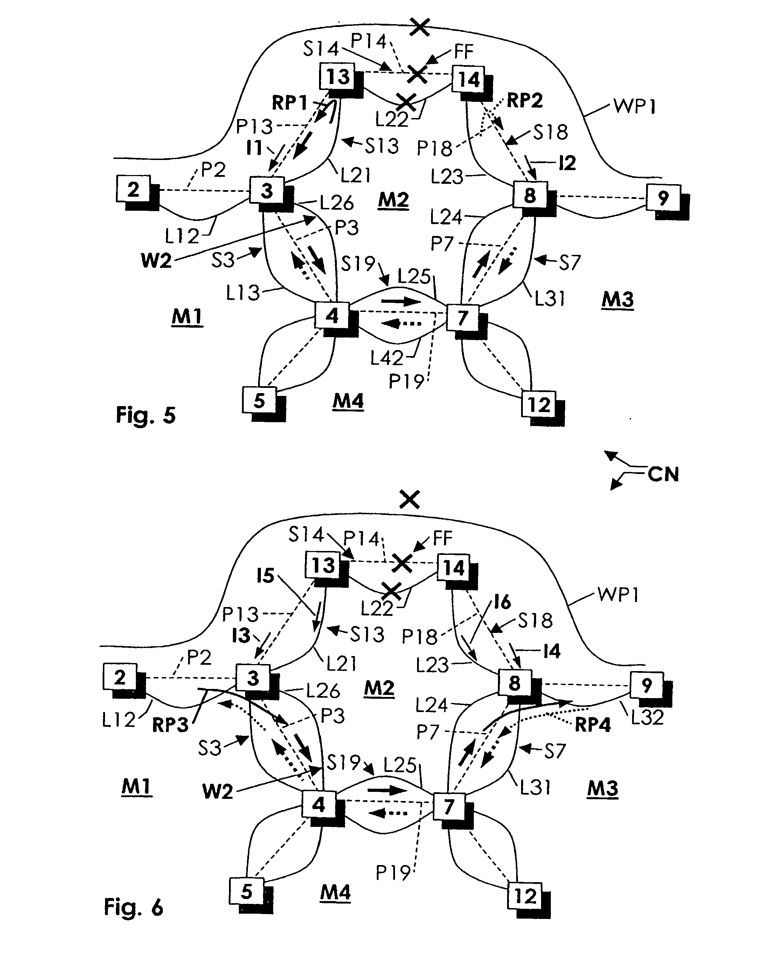

An example of "wrapping" will be explained using figure 5. The nodes 13, 14, e.g. their respective interface modules terminating the connections of the section 14, monitor the section S14 and detect a fatal failure FF of this section S14: for example working and protection links L22, P14 are cut. Thus, the ring working transmission capacity W2 is disturbed, a working traffic path WP1 from node 2 to node 9 via nodes 13, 13, 14, 8 (and vice versa) is troubled. The working traffic path WP1 is in the present example used for bi-directional traffic between the nodes 2 and 9.

Accordingly, node 13, e.g. the function DET of the program module PM, determines the protection connection P13 as the first segment of a restoration transmission path RP1 that is illustrated using arrows with full lines. Consequently, node 13 loops ("wraps") the working traffic arriving at communication link L21 to the protection connection P13, e.g. by means of the function SW1 that instructs the receiving RX and sending means TX of an interface module terminating the section S13 accordingly.

The same strategy is basically performed by the node 14, that loops working traffic arriving at communication link L23 the protection connection P18 of a restoration transmission path RP2 that is illustrated using arrows with dashed lines.

Additionally, the nodes 13, 14 inform the nodes 3, 4, 7, 8 of the ring M2 about the span of the facility failure, i.e. the failed section S14. To this end, the nodes 13, 14 send failure information messages I1 and I2 using a protocol PROT that comprises synchronous transport modules ST. The failure information messages I1 and I2 carry in the present example failure information and additionally data of the working traffic. The modules ST are in the present embodiment STM modules designed according to the definitions of the ITU and comprise consequently a payload PL that carries for example data of the working traffic and a Section Overhead SOH with a Regenerator Section Overhead RSOH and a Multiplex Section Overhead MSOH. The link in fault, i.e. the communication link L22, is for example identified using the K1 and K2 information field of the overhead MSOH. The ring in fault, i.e. the ring M2, is for example identified using the J0 information field of the overhead RSOH and/or MD information field of the overhead MSOH. The fields J0 and/or MD, e.g. a MD1 and/or a MD2 byte(s) not illustrated in the figure, carry for example a relative ring identifier RID or an absolute ring identifier AID assigned to the ring M2.

It is also possible to use another at least partly unused information field of the overhead SOH, e.g. a field UNU, to transmit the information about the location of the failure. It is furthermore possible to identify the location of a failure using an identifier of a node that terminates the span of the failure, for example not illustrated absolute or relative identifiers of the nodes 13, 14.

The ring identifier RID identifier has in the present embodiment 4 different values to distinguish each ring M1, M2, M3 and M4 from the respective adjacent ring M1, M2, M3 and M4. Only four values would be sufficient even if the network CN comprises more than the 4 rings M1, M2, M3 and M4. In the present embodiment four different values are - incidentally - also sufficient for the absolute ring identifier AID. If the network CN would however comprise more than 4 rings, more than 4 values would be necessary for the absolute ring identifier AID.

The nodes 3, 4, 7, 8 are jointly assigned to two or three rings M1 - M4. Thus, the nodes 3, 4, 7, 8 need to know which ring M1, M2, M3 or M4 is affected by the failure in order to further establish the restoration transmission paths RP1 and RP2. Therefore, the nodes 3, 4, 7, 8 evaluate the messages I1 and I2 sent by the nodes 13, 14 and determine the restoration transmission paths RP1 and RP2 based on the failure information derived from the messages I1 and 12. For example the node 3 switches traffic arriving at the protection connection P13 not to the protection connection P2 (of ring M1) but to the protection connection P3 jointly assigned to ring M2 since this ring M2 is affected by the failure at section S14 and not ring M1. The same applies to node 8 that based on the "failure" message 12 containing the ring identifier RID extends the restoration transmission path RP2 not to node 9 of ring M3 but to the node 7 via the protection connection P7 assigned to ring M2.

Accordingly the nodes 3, 4, 7, 8 complete the restoration transmission paths RP1, RP2 along the ring M2 based on the messages I1, I2 which are communicated by the nodes 13, 3, 4, 7, 8 and 14. It has to be noted that the nodes 3, 4, 7, 8 can at least partly modify the messages I1, I2. The nodes 3, 4, 7, 8 can for example modify the MSOH. They could, e.g., change a source or destination address or the like. Finally, the nodes 13, 3, 4, 7, 8 and 14 switch the working traffic completely on the restoration transmission paths RP1, RP2.

The path RP1 may comprise protection connections P13, P3, P19, P7 and P18 with "wrapping" at nodes 13, 14. It is also possible that the path RP1 does not comprise the protection connection P18. Such a scenario with "wrapping" only at node 13 could also be called a combination of wrapping and steering. Accordingly, the path RP2 comprises only protection connections P18, P7, P19, P3 or, in a common scenario, P18, P7, P19, P3 and additionally P13 ("wrapping" at both nodes 13, 14). Figure 5 shows for simplification the restoration transmission paths RP1, RP2 only partially.

The nodes 3, 4, 7, 8 receive the information about the span of the failure, i.e., the messages I1, I2, by means of their respective interface modules, the node 4 for example via the module IM1 terminating the protection connection P3.

An example of "steering" will be explained using figure 6. The basic situation is similar to the example above: the nodes 13 and 14 terminating the section S14 detect the fatal error FF at section S14 while monitoring the connections P14, L22. Thus, the nodes 13 and 14 send failure information messages I3 and I4 to the nodes 3 and 8 respectively using the protocol PROT as explained above. The messages I3 and I4 are similar to the messages I1 and 12. The messages 13 and 14 identify the section S14 as the span of the failure and the ring M2 as the ring affected by the failure. The nodes 3 and 8 and subsequently also the nodes 7 and 8 forward the messages I3 and I4 and so on. Finally, each node 3, 13, 14, 8, 7, 4 of the ring M2 is informed about the failure at section 14 and, in particular, that ring M2 is the ring affected by the failure.

Based on this information, each node 3, 13, 14, 8, 7, 4 of the ring M2 is able to switch traffic that previously was transmitted via section 14 in a reverse direction away from section 14. Accordingly, the nodes 3, 4, 7, 8 detect restoration transmission paths RP3, RP4 replacing the working traffic path WP1. The paths RP3, RP4, illustrated by full line arrows and dashed line arrows respectively, comprise protection connections P3, P19 and P7. The nodes 13, 14 terminating the failed section 14 are not affected by the paths RP3, RP4. The restoration transmission paths RP3, RP4 are shorter than the restoration transmission paths RP1, RP2.

Though it is preferred to send failure information that explicitly identifies the ring affected by a failure, for example using the MD or J0 information field of a SOH, it is also possible to identify the failed ring by using a signaling method according to the invention, which will be explained below. Using this method, an unmodified protocol, e.g., the standard APS protocol, can be used. It is nevertheless possible to use a protocol explicitly identifying the failed ring (as explained above) in combination with the now explained signaling method.

According to this signaling method the nodes 3, 13, 14, 8, 7, 4 of the ring M2 communicate messages I5, I6 (see figure 6) via the undisturbed ring working transmission capacity W2 of ring M2, i.e. via communication links L21, L26, L25, L24, L23 and vice versa. The messages I5, I6 may be standard APS messages identifying the failed section 14 and/or the nodes 13, 14 terminating this section 14 for example using the K1 and K2 information field of the Overhead MSOH. The nodes 3, 13, 14, 8, 7, 4 send and/or receive the messages I5, I6 at their ingress ports assigned to the ring M2, e.g. the working transmission capacity W2 of ring M2. The node 4 receives the messages I5, I6 via ingress ports IN1, IN2 of the receiving means RX of the interface modules IM and IM3 respectively. Accordingly, the node 4 forwards the messages I6, I5 to the adjacent nodes 7 and 3 via not illustrated egress ports of sending means TX of the interface modules IM1 and IM3. These egress ports are assigned to the links L25 and L26. From the fact that the messages I5, I6 are received at ingress ports assigned to the ring M2 the node 4 and accordingly nodes 3, 13, 14, 8, 7 derive that ring M2 is affected by the failure FF. Consequently, the nodes 3, 4, 7, 8 can determine restoration transmission paths RP1 to RP4 as explained above in connection with figures 5 and 6 and switch the working traffic to these paths performing the wrapping and/or steering as explained above.

Those skilled in the art will recognize that the preferred embodiments may be altered without departing from the spirit and scope of the invention as defined in the claims.

The network CN might for example comprise interconnected rings with more or less than 6 network elements. Even 3 or 4 network elements can form rings that may be interconnected with at least one further 3-node-ring or 4-node-ring according to the invention.

The number of nodes per ring needs not be equal for all rings of a network according to the invention. It is for example possible to interconnect 5-node-rings with 6-node-rings.

As known protection switching may be either unidirectional or bi-directional. The above description is related to bi-directional protection switching that takes switching actions for both traffic directions, even when the failure is unidirectional. It has however to be noted, that the invention may also be applied to unidirectional protection switching that takes switching actions only for the affected traffic direction in the case of a unidirectional failure.

The nodes 1 to 16 could be equipped with modules of similar design as the modules IM1 to IM3, one such module however terminating not only one but also two or more sections.

The node could be an "integrated solution" without separate modules IM1 - IM3. The central control means CC of node 4 could for example execute the program code of one or more program modules PM and thus directly control the connecting means TR equipped with suited sending and receiving means.

A program module similar to the program module PM could comprise only the function PG for sending and receiving failure information about a facility failure. Preferably, this program module comprises additionally the function MON for monitoring a terminated transmission section. The functions DET and SWI for determining a restoration transmission path and switching working traffic to this path are preferably, but not necessarily comprised in this program module.

## Claims

1. A method of restoring a facility failure (FF) in a communication network (CN) comprising a first ring (M2) and at least one second ring (M1, M3, M4) being adjacent to and interconnected with said first ring (M2), each of said rings providing ring-shaped working transmission capacity (W1-W4) and ring-shaped protection transmission capacity (PM1-PM4), said working and protection transmission capacity (W1-W4; PM1-PM4) being provided by transmission sections (S1-S19), each transmission section (S1-S19) being terminated by two network elements (1-16), said first ring (M2) and said at least one second ring (M1, M3, M4) comprising at least one first shared transmission section (S3, S4, S19, S7, S12),wherein the protection transmission capacity (PM1-PM4) provided by said at least one first shared transmission section (S3, 54, S19, S7, S12) is shared at least partly (P3, P4, P19, P7, P12) as protection transmission capacity of said first ring (M2) and said at least one second ring (M1, M3, M4);
said method comprising the steps of:
- monitoring said first ring (M2) and said at least one second ring (M1, M3, M4) for a facility failure (FF) by the network elements (1-16) of the respective ring,
- responsive to detecting a facility failure (FF), communicating failure information (I1-I6) containing data about the span of said facility failure (FF), said failure information (I1-I6) identifying the ring (M2) affected by said facility failure (FF) by means of a ring identifier (RID, AID),
- based on said failure information (I1-I6), determining a restoration transmission channel (RP1-RP4) to restore said facility failure (FF), said restoration transmission channel (RP1-RP4) using the undisturbed protection transmission capacity (PM1-PM4) of the ring (M2) affected by said facility failure (FF) as indicated by said ring identifier (RID, AID), and
- switching working traffic of the ring (M2, M1, M3, M4) affected by said facility failure (FF) to said restoration transmission channel (RP1-RP4).

2. A method as claimed in claim 1 wherein said ring identifier (RID) is a relative identifier identifying said affected ring (M2) in relation to the respective other ring (M1, M3, M4).

3. A method as claimed in claim 1 wherein said ring identifier (AID) is an absolute identifier identifying said affected ring (M2) uniquely in said communication network (CN).

4. A method as claimed in claim 1 wherein data about the span of said facility failure (FF) identifies the network elements (13, 14) terminating the span.

5. A method as claimed in claim 1 wherein said failure information (I1-I6) is transmitted by means of a predefined protocol (PROT).

6. A method as claimed in claim 5 wherein said predefined protocol (PROT) comprises synchronous transport modules (STM).

7. A method as claimed in claim 6 wherein an Automatic Protection Switching (APS) channel of a synchronous transport module is used to transmit said failure information (I1-I6), said Automatic Protection Switching (APS) channel using the K1 byte and the K2 byte and at least one MD byte or the J0 byte to transmit said failure information (I1-I6) containing data about the span of said facility failure (FF) and said failure information (I1-I6) identifying the ring (M2) affected by said facility failure (FF).

8. A method as claimed in claim 1 wherein said restoration transmission channel (RP1-RP4) includes said protection transmission capacity (P3, P4, P19, P7, P12) of said at least one first shared transmission section (S3, S4, S19, S7, S12).

9. A method as claimed in claim 1 wherein said network elements (1-16) detect a line failure and/or failure of a network element (1-16) as said facility failure (FF).

10. A method as claimed in claim 1 wherein said communication network (CN) is or comprises a synchronous digital network.

11. A method as claimed in claim 1 wherein said first ring (M2) and said at least one second ring (M1, M3, M4) are multiplex section (S1-S19) shared protection rings.

12. A communication network (CN) for restoring a facility failure (FF) comprising a first ring (M2) and at least one second ring (M1, M3, M4) being adjacent to and interconnected with said first ring (M2), each of said rings providing ring-shaped working transmission capacity (W1-W4) and ring-shaped protection transmission capacity (PM1-PM4), said working and protection transmission capacity (W1-W4; PM1-PM4) being provided by transmission sections (S1-S19), each transmission section (S1-S19) being terminated by two network elements (1-16), said first ring (M2) and said at least one second ring (M1, M3, M4) comprising at least one first shared transmission section (S3, 54, S19, S7, S12), wherein the protection transmission capacity (PM1-PM4) provided by said at least one first shared transmission section (S3, S4, S19, 57, S12) is shared at least partly (P3, P4, P19, P7, P12) as protection transmission capacity of said first ring (M2) and said at least one second ring (M1, M3, M4) and wherein said network elements (1-16) of said first ring (M2) and of said at least one second ring (M1, M3, M4) being adapted to carry out the steps of:
- monitoring said first ring (M2) and said at least one second ring (M1, M3, M4) for a facility failure (FF) by the network elements (1-16) of the respective ring,
- responsive to detecting a facility failure (FF), communicating failure information (I1-I6) containing data about the span of said facility failure (FF), said failure information (I1-I6) identifying the ring (M2) affected by said facility failure (FF) by means of a ring identifier (RID, AID),
- based on said failure information (I1-I6), determining a restoration transmission channel (RP1-RP4) to restore said facility failure (FF), said restoration transmission channel (RP1-RP4) using the undisturbed protection transmission capacity (PM1-PM4) of the ring (M2) affected by said facility failure (FF) as indicated by said ring identifier (RID, AID), and
- switching working traffic of the ring (M2, M1, M3, M4) affected by said facility failure (FF) to said restoration transmission channel (RP1-RP4).

13. A network element (1-16) of a first ring (M2) of a communication network (CN) for restoring a facility failure (FF), said communication network (CN) further comprising at least one second ring (M1, M3, M4) being adjacent to and interconnected with said first ring (M2), each of said rings providing ring-shaped working transmission capacity (W1-W4) and ring-shaped protection transmission capacity (PM1-PM4), said working and protection transmission capacity (W1-W4; PM1-PM4) being provided by transmission sections (S1-S19), each transmission section (S1-S19) being terminated by two network elements (1-16), said first ring (M2) and said at least one second ring (M1, M3, M4) comprising at least one first shared transmission section (S3, S4, S19, S7, S12), wherein the protection transmission capacity (PM1-PM4) provided by said at least one first shared transmission section (S3, S4, S19, S7, S12) is shared at least partly (P3, P4, P19, P7, P12) as protection transmission capacity of said first ring (M2) and said at least one second ring (M1, M3, M4) and wherein said network element (1-16) comprising means (IM1-IM3) for carrying out the steps of:
- monitoring said first ring (M2) and said at least one second ring (M1, M3, M4) for a facility failure (FF) by the network elements (1-16) of the respective ring,
- responsive to detecting a facility failure (FF), communicating failure information (I1-I6) containing data about the span of said facility failure (FF), said failure information (11-16) identifying the ring (M2) affected by said facility failure (FF) by means of a ring identifier (RID, AID),
- based on said failure information (I1-I6), determining a restoration transmission channel (RP1-RP4) to restore said facility failure (FF), said restoration transmission channel (RP1-RP4) using the undisturbed protection transmission capacity (PM1-PM4) of the ring (M2) affected by said facility failure (FF) as indicated by said ring identifier (RID, AID), and
- switching working traffic of the ring (M2, M1, M3, M4) affected by said facility failure (FF) to said restoration transmission channel (RP1-RP4).

## Patentansprüche

1. Verfahren zum Wiederherstellen nach Betriebsstörungen (FF) in einem Kommunikationsnetz (CN), umfassend einen ersten Ring (M2) und mindestens einen zweiten Ring (M1, M3, M4), der benachbart zu und untereinander mit dem ersten Ring (M2) verbunden ist, wobei jeder der Ringe ringförmige Betriebsübertragungskapazität (W1 - W4) und ringförmige Schutzübertragungskapazität (PM1 - PM4) bereitstellt, wobei die Betriebs- und die Schutzübertragungskapazität (W1 - W4; PM1 - PM4) durch Übertragungsabschnitte (S1 - S19) bereitgestellt werden, wobei jeder Übertragungsabschnitt (S1 - S19) durch zwei Netzelemente (1 - 16) abgeschlossen wird, wobei der erste Ring (M2) und mindestens ein zweiter Ring (M1, M3, M4) mindestens einen ersten gemeinsam genutzten Übertragungsabschnitt (S3, S4, S19, S7, S12) umfassen, in welchem die Schutzübertragungskapazität (PM1 - PM4), die durch mindestens einen ersten gemeinsam genutzten Übertragungsabschnitt (S3, S4, S19, S7, S12) bereitgestellt ist, mindestens teilweise (P3, P4, P19, P7, P12) als Schutzübertragungskapazität des ersten Ringes (M2) und mindestens eines zweiten Ringes (M1, M3, M4) gemeinsam genutzt wird; wobei das Verfahren die Schritte umfaßt:
- Überwachen des ersten Ringes (M2) und mindestens eines zweiten Ringes (M1, M3, M4) auf eine Betriebsstörung (FF) durch die Netzelemente (1 - 16) des entsprechenden Ringes,
- reagierend auf das Erkennen einer Betriebsstörung (FF), Übermitteln von Störungsinformationen (I1 - I6), die Daten über den Bereich der Betriebsstörung (FF) enthalten, wobei die Störungsinformationen (I1 - 16) den von der Betriebsstörung (FF) betroffenen Ring (M2) mittels eines Ringidentifikators (RID, AID) identifizieren,
- auf der Basis der Störungsinformationen (I1 - 16), Bestimmen eines Wiederherstellungsübertragungskanals (RP1 - RP4), um nach der Betriebsstörung (FF) wiederherzustellen, wobei der Wiederherstellungsübertragungskanal (RP1 - RP4) die ungestörte Schutzübertragungskapazität (PM1 - PM4) des von der Betriebsstörung (FF) betroffenen Ringes (M2) verwendet, wie durch den Ringidentifikator (R1D, AID) angegeben ist, und
- Durchschalten des Betriebsverkehrs des Ringes (M2, M1, M3, M4), der von der Betriebsstörung (FF) betroffen ist, auf den Wiederherstellungsübertragungskanal (RP1 - RP4).

2. Verfahren nach Anspruch 1, in welchem der Ringidentifikator (RID) ein relativer identifikator ist, der den betroffenen Ring (M2) bezüglich des entsprechenden anderen Ringes (M1, M3, M4) identifiziert.

3. Verfahren nach Anspruch 1, in welchem der Ringidentifikator (ATD) ein absoluter Identifikator ist, der den betroffenen Ring (M2) eindeutig in dem Kommunikationsnetz (CN) identifiziert.

4. Verfahren nach Anspruch 1, in welchem die Daten über den Bereich der Betriebsstörung (FF) die Netzelemente (13, 14) identifizieren, die den Bereich abschließen.

5. Verfahren nach Anspruch 1, in welchem die Störungsinformationen (I1 - 16) mittels eines vordefinierten Protokolls (PROT) übertragen werden.

6. Verfahren nach Anspruch 5, in welchem das vordefinierte Protokoll (PROT) synchrone Transportmodule (STM) umfaßt.

7. Verfahren nach Anspruch 6, in welchem ein APS-Kanal (Automatic Protection Switching) eines synchronen Transportmoduls verwendet wird, um die Störungsinformationen (I1 - 16) zu übertragen, wobei der APS-Kanal (Automatic Protection Switching) das K1-Byte und das K2-Byte und mindestens ein MD-Byte oder das J0-Byte verwendet, um die Störungsinformationen (I1 - I6), die Daten über den Bereich der Betriebsstörung (FF) enthalten, und Störungsinformationen (11 - 16), die den von der Betriebsstörung (FF) betroffenen Ring (M2) identifizieren, zu übertragen.

8. Verfahren nach Anspruch 1, in welchem der Wiederherstellungsübertragungskanal (RP1 - RP4) die Schutzübertragungskapazität (P3, P4, P19, P7, P12) des mindestens einen ersten gemeinsam genutzten Übertragungsabschnittes (S3, S4, S19, S7, S12) beinhaltet.

9. Verfahren nach Anspruch 1, in welchem die Netzelemente (1 - 16) eine Leitungsstörung und/oder Störung eines Netzelementes (1 - 16) als Betriebsstörung (FF) erkennen.

10. Verfahren nach Anspruch 1, in welchem das Kommunikationsnetz (CN) ein synchrones digitales Netz ist oder umfaßt.

11. Verfahren nach Anspruch 1, in welchem der erste Ring (M2) und mindestens ein zweiter Ring (M1, M3, M4) gemeinsam genutzte Schutzringe des Multiplexabschnittes (S1 - S19) sind.

12. Kommunikationsnetz (CN) zum Wiederherstellen nach Betriebsstörungen (FF), umfassend einen ersten Ring (M2) und mindestens einen zweiten Ring (M1, M3, M4), der benachbart zu und untereinander mit dem ersten Ring (M2) verbunden ist, wobei jeder der Ringe ringförmige Betriebsübertragungskapazität (W1 - W4) und ringförmige Schutzübertragungskapazität (PM1 - PM4) bereitstellt, wobei die Betriebs- und die Schutzübertragungskapazität (W1 - W4; PM1 - PM4) durch Übertragungsabschnitte (S1 - S19) bereitgestellt werden, wobei jeder Übertragungsabschnitt (S1 - S19) durch zwei Netzelemente (1 - 16) abgeschlossen wird, wobei der erste Ring (M2) und mindestens ein zweiter Ring (M1, M3, M1) mindestens einen ersten gemeinsam genutzten Übertragungsahschnitt (S3, S4, S19, S7, S12) umfassen, in welchem die Schutzübertragungskapazität (PM1 - PM4), die durch mindestens einen ersten gemeinsam genutzten Übertragungsabschnitt (S3, S4, S19, S7, S12) bereitgestellt ist, mindestens teilweise (P3, P4, P19, P7, P12) als Schutzübertragungskapazität des ersten Ringes (M2) und mindestens einen zweiten Ringes (M1, M3, M4) gemeinsam genutzt wird, und in welchem die Netzelemente (1 - 16) des ersten Ringes (M2) und des mindestens einen zweiten Ringes (M1, M3, M4) angepaßt sind, um die Schritte durchzuführen:
- Überwachen des ersten Ringes (M2) und mindestens eines zweiten Ringes (M1, M3, M4) auf eine Betriebsstörung (FF) durch die Netzelemente (1 - 16) des entsprechenden Ringes,
- reagierend auf das Erkennen einer Betriebsstörung (FF), Übermitteln von Störungsinformationen (I1 - 16), die Daten über den Bereich der Betriebsstörung (FF) enthalten, wobei die Störungsinformationen (I1 - 16) den von der Betriebsstörung (FF) betroffenen Ring (M2) mittels eines Ringidentifikators (RID, AID) identifizieren,
- auf der Basis der Störungsinformationen (I1 - 16), Bestimmen eines Wiederherstellungsübertragungskanals (RP1 - RP4), um nach der Betriebsstörung (FF) wiederherzustellen, wobei der Wiederherstellungsübertragungskanal (RP1 - RP4) die ungestörte Schutzübertragungskapazität (PM1 - PM4) des von der Betriebsstörung (FF) betroffenen Ringes (M2) verwendet, wie durch den Ringidentifikator (RID, AID) angegeben ist, und
- Durchschalten des Betriebsverkehrs des Ringes (M2, M1, M3, M4), der von der Betriebsstörung (FF) betroffen ist, auf den Wiederherstellungsübertragungskanal (RP1 - RP4).

13. Netzelement (1 16) eines ersten Ringes (M2) eines Kommunikationsnetzes (CN) zum Wiederherstellen nach Betriebsstörungen (FF), wobei das Kommunikationsnetz (CN) außerdem einen zweiten Ring (M1, M3, M4) umfaßt, der benachbart zu und untereinander mit dem ersten Ring (M2) verbunden ist, wobei die Ringe ringförmige Betriebsübertragungskapazität (W1 - W4) und ringförmige Schutzübertragungskapazität (PM1 - PM4) bereitstellen, wobei die Betriebs- und die Schutzübertragungskapazität (W1 - W1; PM1 - PM1) durch Übertragungsabschnitte (S1 - S19) bereitgestellt werden, wobei jeder Übertragungsabschnitt (S1 - S19) durch zwei Netzelemente (1 - 16) abgeschlossen wird, wobei der erste Ring (M2) und mindestens ein zweiter Ring (M1, M3, M4) mindestens einen ersten gemeinsam genutzten Übertragungsabschnitt (S3, S4, S19, S7, S12) umfassen, in welchem die Schutzübertragungskapazität (PM1 - PM4), die durch mindestens einen ersten gemeinsam genutzten Übertragungsabschnitt (S3, S4, S19, S7, S12) bereitgestellt ist, mindestens teilweise (P3, P4, P19, P7, P12) als Schutzübertragungskapazität des ersten Ringes (M2) und mindestens einen zweiten Ringes (M1, M3, M4) gemeinsam genutzt wird, und in welchem das Netzelement (1 - 16) Einrichtungen (IM1 - IM3) zum Durchführen der Schritte umfaßt:
- Überwachen des ersten Ringes (M2) und mindestens eines zweiten Ringes (M1, M3, M4) auf eine Betriebsstörung (FF) durch die Netzelemente (1 - 16) des entsprechenden Ringes,
- reagierend auf das Erkennen einer Betriebsstörung (FF), Übermitteln von Störungsinformationen (I1 - I6), die Daten über den Bereich der Betriebsstörung (FF) enthalten, wobei die Störungsinformationen (I1 - 16) den von der Betriebsstörung (FF) betroffenen Ring (M2) mittels eines Ringidentifikators (RID, ATD) identifizieren,
- auf der Basis der Störungsinformationen (I1 - I6), Bestimmen eines Wiederherstellungsübertragungskanals (RP1 - RP4), um nach der Betriebsstörung (FF) wiederherzustellen, wobei der Wiederherstellungsübertragungskanal (RP1 - RP4) die ungestörte Schutzübertragungskapazität (PM1 - PM4) des von der Betriebsstörung (FF) betroffenen Ringes (M2) verwendet, wie durch den Ringidentifikator (RID, AID) angegeben ist, und
- Durchschalten des Betriebsverkehrs des Ringes (M2, M1, M3, M4), der von der Betriebsstörung (FF) betroffen ist, auf den Wiederherstellungsübertragungskanal (RP1 - RP4).

## Revendications

1. Procédé de restauration d'une défaillance d'installation (FF) dans un réseau de communication (CN) comprenant un premier anneau (M2) et au moins un deuxième anneau (M1, M3, M4) qui est adjacent au et interconnecté avec ledit premier anneau (M2), chacun desdits anneaux fournissant une capacité de transmission de travail en forme d'anneau (W1-W4) et une capacité de transmission de protection en forme d'anneau (PM1-PM4), lesdites capacités de transmission de travail et de protection (W1-W4; PM1-PM4) étant fournies par des sections de transmission (S1-S19), chaque section de transmission (S1-S19) étant terminée par deux éléments de réseau (1-16), ledit premier anneau (M2) et ledit au moins un deuxième anneau (M1, M3, M4) comprenant au moins une première section de transmission partagée (S3, S4, S19, S7, S12), dans lequel la capacité de transmission de protection (PM1-PM4) fournie par ladite au moins une première section de transmission partagée (S3, S4, S19, S7, S12) est partagée au moins en partie (P3, P4, P19, P7, P12) comme capacité de transmission de protection dudit premier anneau (M2) et dudit au moins un deuxième anneau (M1, M3, M4) ;
ledit procédé comprenant les étapes consistant à :
- surveiller ledit premier anneau (M2) et ledit au moins un deuxième anneau (M1, M3, M4) pour une défaillance d'installation (FF) par les éléments de réseau (1-16) de l'anneau respectif,
- en réponse à la détection d'une défaillance d'installation (FF), communiquer l'information de défaillance (I1-I6) contenant des données concernant la liaison de ladite défaillance d'installation (FF), ladite information de défaillance (I1-I6) identifiant l'anneau (M2) affecté par ladite défaillance d'installation (FF) au moyen d'un identificateur d'anneau (RID, AID),
- sur la base de ladite information de défaillance (I1-I6), déterminer un canal de transmission de restauration (RP1-RP4) pour restaurer ladite défaillance d'installation (FF), ledit canal de transmission de restauration (RP1-RP4) utilisant la capacité de transmission de protection non perturbée (PM1-PM4) de l'anneau (M2) affecté par ladite défaillance d'installation (FF) comme indiqué par ledit identificateur d'anneau (RID, AID), et
- commuter le trafic de travail de l'anneau (M2, M1, M3, M4) affecté par ladite défaillance d'installation (FF) vers ledit canal de transmission de restauration (RP1-RP4).

2. Procédé tel que revendiqué dans la revendication 1, dans lequel ledit identificateur d'anneau (RID) est un identificateur relatif identifiant ledit anneau affecté (M2) relativement à l'autre anneau respectif (M1, M3, M4).

3. Procédé tel que revendiqué dans la revendication 1, dans lequel ledit identificateur d'anneau (AID) est un identificateur absolu identifiant ledit anneau affecté (M2) de manière unique dans ledit réseau de communication (CN).

4. Procédé tel que revendiqué dans la revendication 1, dans lequel les données concernant la liaison de ladite défaillance d'installation (FF) identifient les éléments de réseau (13, 14) terminant la liaison.

5. Procédé tel que revendiqué dans la revendication 1, dans lequel ladite information de défaillance (I1-I6) est transmise au moyen d'un protocole prédéfini (PROT).

6. Procédé tel que revendiqué dans la revendication 5, dans lequel ledit protocole prédéfini (PROT) comprend des modules de transport synchrone (STM).

7. Procédé tel que revendiqué dans la revendication 6, dans lequel un canal de commutation de protection automatique (APS) d'un module de transport synchrone est utilisé pour transmettre ladite information de défaillance (11-16), ledit canal de commutation de protection automatique (APS) utilisant l'octet K1 et l'octet K2 et au moins un octet MD ou l'octet J0 pour transmettre ladite information de défaillance (I1-I6) contenant les données concernant la liaison de ladite défaillance d'installation (FF) et ladite information de défaillance (I1-I6) identifiant l'anneau (M2) affecté par ladite défaillance d'installation (FF).

8. Procédé tel que revendiqué dans la revendication 1, dans lequel ledit canal de transmission de restauration (RP1-RP4) inclut ladite capacité de transmission de protection (P3, P4, P19, P7, P12) de ladite au moins une première section de transmission partagée (S3, S4, S19, S7, S12).

9. Procédé tel que revendiqué dans la revendication 1, dans lequel lesdits éléments de réseau (1-16) détectent une défaillance de ligne et/ou une défaillance d'un élément de réseau (1-16) comme ladite défaillance d'installation (FF).

10. Procédé tel que revendiqué dans la revendication 1, dans lequel ledit réseau de communication (CN) est ou comprend un réseau numérique synchrone.

11. Procédé tel que revendiqué dans la revendication 1, dans lequel ledit premier anneau (M2) et ledit au moins un deuxième anneau (M1, M3, M4) sont des anneaux de protection partagée de section de multiplexage (S1-S19).

12. Réseau de communication (CN) pour restaurer une défaillance d'installation (FF) comprenant un premier anneau (M2) et au moins un deuxième anneau (M1, M3, M4) qui est adjacent au et interconnecté avec ledit premier anneau (M2), chacun desdits anneaux fournissant une capacité de transmission de travail en forme d'anneau (W1-W4) et une capacité de transmission de protection en forme d'anneau (PM1-PM4), lesdites capacités de transmission de travail et de protection (W1-W4 ; PM1-PM4) étant fournies par des sections de transmission (S1-S19), chaque section de transmission (S1-S19) étant terminée par deux éléments de réseau (1-16), ledit premier anneau (M2) et ledit au moins un deuxième anneau (M1, M3, M4) comprenant au moins une première section de transmission partagée (S3, S4, S19, S7, S12), dans lequel la capacité de transmission de protection (PM1-PM4) fournie par ladite au moins une première section de transmission partagée (S3, S4, S19, S7, S12) est partagée au moins en partie (P3, P4, P19, P7, P12) comme capacité de transmission de protection dudit premier anneau (M2) et dudit au moins un deuxième anneau (M1, M3, M4) et dans lequel lesdits éléments de réseau (1-16) dudit premier anneau (M2) et dudit au moins un deuxième anneau (M1, M3, M4) sont adaptés pour exécuter les étapes consistant à :
- surveiller ledit premier anneau (M2) et ledit au moins un deuxième anneau (M1, M3, M4) pour une défaillance d'installation (FF) par les éléments de réseau (1-16) de l'anneau respectif,
- en réponse à la détection d'une défaillance d'installation (FF), communiquer l'information de défaillance (11-16) contenant des données concernant la liaison de ladite défaillance d'installation (FF), ladite information de défaillance (11-16) identifiant l'anneau (M2) affecté par ladite défaillance d'installation (FF) au moyen d'un identificateur d'anneau (RID, AID),
- sur la base de ladite information de défaillance (I1-I6), déterminer un canal de transmission de restauration (RP1-RP4) pour restaurer ladite défaillance d'installation (FF), ledit canal de transmission de restauration (RP1-RP4) utilisant la capacité de transmission de protection non perturbée (PM1-PM4) de l'anneau (M2) affecté par ladite défaillance d'installation (FF) comme indiqué par ledit identificateur d'anneau (RID, AID), et
- commuter le trafic de travail de l'anneau (M2, M1, M3, M4) affecté par ladite défaillance d'installation (FF) vers ledit canal de transmission de restauration (RP1-RP4).

13. Elément de réseau (1-16) d'un premier anneau (M2) d'un réseau de communication (CN) pour restaurer une défaillance d'installation (FF), ledit réseau de communication (CN) comprenant en outre au moins un deuxième anneau (M1, M3, M4) qui est adjacent au et interconnecté avec ledit premier anneau (M2), chacun desdits anneaux fournissant une capacité de transmission de travail en forme d'anneau (W1-W4) et une capacité de transmission de protection en forme d'anneau (PM1-PM4), lesdites capacités de transmission de travail et de protection (W1-W4 ; PM1-PM4) étant fournies par des sections de transmission (S1-S19), chaque section de transmission (S1-S19) étant terminée par deux éléments de réseau (1-16), ledit premier anneau (M2) et ledit au moins un deuxième anneau (M1, M3, M4) comprenant au moins une première section de transmission partagée (S3, S4, S19, S7, S12), dans lequel la capacité de transmission de protection (PM1-PM4) fournie par ladite au moins une première section de transmission partagée (S3, S4, S19, S7, S12) est partagée au moins en partie (P3, P4, P19, P7, P12) comme capacité de transmission de protection dudit premier anneau (M2) et dudit au moins un deuxième anneau (M1, M3, M4) et dans lequel ledit élément de réseau (1-16) comprend des moyens (IM1-IM3) pour exécuter les étapes consistant à :
- surveiller ledit premier anneau (M2) et ledit au moins un deuxième anneau (M1, M3, M4) pour une défaillance d'installation (FF) par les éléments de réseau (1-16) de l'anneau respectif,
- en réponse à la détection d'une défaillance d'installation (FF), communiquer l'information de défaillance (I1-I6) contenant des données concernant la liaison de ladite défaillance d'installation (FF), ladite information de défaillance (I1-I6) identifiant l'anneau (M2) affecté par ladite défaillance d'installation (FF) au moyen d'un identificateur d'anneau (RID, AID),
- sur la base de ladite information de défaillance (I1-I6), déterminer un canal de transmission de restauration (RP1-RP4) pour restaurer ladite défaillance d'installation (FF), ledit canal de transmission de restauration (RP1-RP4) utilisant la capacité de transmission de protection non perturbée (PM1-PM4) de l'anneau (M2) affecté par ladite défaillance d'installation (FF) comme indiqué par ledit identificateur d'anneau (RID, AID), et
- commuter le trafic de travail de l'anneau (M2, M1, M3, M4) affecté par ladite défaillance d'installation (FF) vers ledit canal de transmission de restauration (RP1-RP4).
